# EUROPEAN PATENT APPLICATION

(11) **EP 3 659 735 A1**
(43) Date of publication of application: **03.06.2020**
(21) Application number: 19212190.3
(22) Date of filing: 28.11.2019
(51) Int. Cl.: B23K 9/09, B23K 9/095, B23K 9/173, B23K 9/10

(54) **METHOD TO CONTROL AN ARC WELDING SYSTEM TO REDUCE SPATTER**

(30) Priority: 28.11.2018 US 201816202199
(71) Applicant: Lincoln Global, Inc., Santa Fe Springs, CA 90670 (US)
(72) Inventor: PETERS, Steven R., Huntsburg, OH Ohio 44046 (US); FLEMING, Daniel P., Painesville, OH Ohio 44077 (US)
(74) Representative: Grosse Schumacher Knauer von Hirschhausen

(57) **Abstract**

A system for controlling arc length by regulating short circuit events during a welding process includes a welding power supply configured to conduct a free flight transfer pulsed arc welding process between a welding electrode (E) and a workpiece (W), and a controller (170) operatively connected to the welding power supply to control a welding waveform (500) of the free flight transfer pulsed arc welding process. The controller (170) is configured to automatically determine (1125) whether or not tethered incipient short circuits are included in said welding waveform (500), monitor (1130) a short circuit event characteristic during the free flight transfer pulsed arc welding process, and automatically adjust (1140), based on said short circuit event characteristic, at least one parameter of said welding waveform (500) to regulate tethered incipient short circuiting of the welding electrode (E) to the workpiece (W) during the free flight transfer pulsed arc welding process after determining that tethered incipient short circuits are included in said welding waveform (500).

## Description

This application is a continuation-in-part of U.S. Utility Patent Application Number 15/236,672, filed on August 15, 2016, which is a divisional of U.S. Utility Patent Application Number 13/267,153, filed on October 6, 2011, now U.S. Patent Number 9,415,457, which claims priority to U.S. Provisional Patent Application Numbers 61/405,895, filed on October 22, 2010, and 61/413,007, filed on November 12, 2010. The contents of all above-identified patent applications are fully incorporated herein by reference.

### TECHNICAL FIELD

The invention relates to a system for controlling arc length by regulating short circuit events during a welding process according to the preamble of claim 1. Certain embodiments relate to pulsed electric arc welding equipment and processes. More particularly, certain embodiments relate to anticipating or reacting to short circuits formed between a welding electrode and a workpiece during a pulsed electric arc welding process by reducing the output current during the time of the short to reduce spatter.

### BACKGROUND

In electric arc welding, a popular welding process is pulse welding which primarily uses a solid wire electrode with an outer shielding gas. MIG welding uses spaced pulses which first melt the end of an advancing wire electrode and then propels the molten metal from the end of the wire through the arc to the workpiece. A globular mass of molten metal is transferred during each pulse period of the pulse welding process. During certain pulse periods, especially in applications where the welding electrode operates very close to the workpiece, molten metal contacts the workpiece before being entirely released from the advancing wire electrode. This creates a short circuit (a.k.a., a short) between the advancing wire electrode and the workpiece. It is desirable to eliminate or clear the short rapidly to obtain the consistency associated with proper pulse welding. However, clearing a short can result in undesirable spatter being generated. Such spatter causes inefficiencies in the welding process and can result in molten metal being spattered over the workpiece which may have to be removed later using a grinding tool, for example.

Further limitations and disadvantages of conventional, traditional, and proposed approaches will become apparent to one of skill in the art, through comparison of such approaches with embodiments of the present invention as set forth in the remainder of the present application with reference to the drawings.

### BRIEF SUMMARY

The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with one aspect of the present invention, provided is a system for controlling arc length by regulating short circuit events during a welding process. The system includes a welding power supply configured to conduct a free flight transfer pulsed arc welding process between a welding electrode and a workpiece, and a controller operatively connected to the welding power supply to control a welding waveform of the free flight transfer pulsed arc welding process. The controller is configured to automatically determine, based on a selected welding waveform, a frequency of tethered incipient short circuiting with respect to N pulse periods of the welding waveform, wherein N is an integer. The controller is further configured to monitor short circuit events during the free flight transfer pulsed arc welding process, and automatically adjust, based on said short circuit events, at least one parameter of said welding waveform to regulate the frequency of tethered incipient short circuiting of the welding electrode to the workpiece during the free flight transfer pulsed arc welding process.

In certain embodiments, the at least one parameter of the welding waveform includes a pulse width of a periodic pulse in the welding waveform. In certain embodiments, the at least one parameter of the welding waveform includes a pulse magnitude of a periodic pulse in the welding waveform. In certain embodiments, the at least one parameter of the welding waveform includes a pulse frequency of a periodic pulse in the welding waveform. In certain embodiments, the at least one parameter of said welding waveform includes both of a pulse width and a pulse magnitude of a peak pulse in said welding waveform. In certain embodiments, the welding waveform includes a peak pulse and a plasma boost pulse having a smaller pulse magnitude than said peak pulse, and the at least one parameter of the welding waveform includes the pulse magnitude of the plasma boost pulse. In certain embodiments, the frequency of tethered incipient short circuiting is regulated such that more pulse periods lack a short circuit event than include a short circuit event. In certain embodiments, the controller regulates the frequency of tethered incipient short circuiting of the welding electrode to the workpiece such that selected pulse periods include a tethered incipient short circuit and other pulse periods do not include a tethered incipient short circuit. In certain embodiments, the controller is configured to adjust the at least one parameter of the welding waveform based on duration of the short circuit events. In certain embodiments, the controller is configured to adjust the at least one parameter of the welding waveform based on timing of the short circuit events within respective pulse periods. In certain embodiments, the frequency of tethered incipient short circuiting is one short circuit event per N pulse periods, wherein N is greater than one.

In accordance with another aspect of the present invention, provided is a system for controlling arc length by regulating short circuit events during a welding process. The system includes a welding power supply configured to conduct a free flight transfer pulsed arc welding process between a welding electrode and a workpiece, and a controller operatively connected to the welding power supply to control a welding waveform of the free flight transfer pulsed arc welding process. The controller is configured to automatically determine whether or not tethered incipient short circuits are included in said welding waveform, monitor a short circuit event characteristic during the free flight transfer pulsed arc welding process, and automatically adjust, based on said short circuit event duration, at least one parameter of said welding waveform to regulate tethered incipient short circuiting of the welding electrode to the workpiece during the free flight transfer pulsed arc welding process, after determining that tethered incipient short circuits are included in said welding waveform.

In certain embodiments, the at least one parameter of the welding waveform includes a pulse width of a periodic pulse in said welding waveform. In certain embodiments, the at least one parameter of the welding waveform includes a pulse magnitude of a periodic pulse in the welding waveform. In certain embodiments, the at least one parameter of the welding waveform includes a pulse frequency of a periodic pulse in the welding waveform. In certain embodiments, the at least one parameter of the welding waveform includes both of a pulse width and a pulse magnitude of a peak pulse in the welding waveform. In certain embodiments, the controller regulates a frequency of tethered incipient short circuiting of the welding electrode to the workpiece such that selected pulse periods include a tethered incipient short circuit and other pulse periods do not include a tethered incipient short circuit. In further embodiments, more pulse periods lack a short circuit event than include a short circuit event. In still further embodiments, the frequency of tethered incipient short circuiting is one short circuit event per N pulse periods, wherein N is an integer greater than one. In certain embodiments, the short circuit event characteristic includes a short circuit duration. In certain embodiments, the short circuit event characteristic includes a frequency of tethered incipient short circuiting of the welding electrode to the workpiece. In certain embodiments, the short circuit event characteristic includes a current magnitude during short clearing. In certain embodiments, the short circuit event characteristic includes a timing of a short circuit event within a pulse period. In certain embodiments, the welding waveform includes more than one tethered incipient short circuit per pulse period, and the controller adjusts the at least one parameter of the welding waveform based on a summed duration of the more than one tethered incipient short circuit per pulse period.

These and other features of the claimed invention, as well as details of illustrated embodiments thereof, will be more fully understood from the following description, drawings and claims.

### BRIEF DESCRIPTION OF THE DRAWINGS

Fig. 1 illustrates a block diagram of an example embodiment of an electric arc welding system incorporating a switching module in a welding current return path;
Fig. 2 illustrates a diagram of an example embodiment of a portion of the system of Fig. 1, including the switching module in the welding current return path;
Fig. 3 illustrates a schematic diagram of an example embodiment of the switching module of Fig. 1 and Fig. 2;
Fig. 4 illustrates a flowchart of a first example embodiment of a method for preventing spatter in a pulsed electric arc welding process using the system of Fig. 1;
Fig. 5 illustrates an example of a conventional pulsed output current waveform resulting from a conventional pulsed electric arc welder that does not use the switching module of Figs. 1-3 in accordance with the method of Fig. 4;
Fig. 6 illustrates the exploding spatter process discovered using high speed video technology in a free-flight transfer process having a tethered connection;
Fig. 7 illustrates an example of a pulsed output current waveform resulting from the pulsed electric arc welder of Fig. 1 that does use the switching module of Figs. 1-3 in accordance with the method of Fig. 4;
Fig. 8 illustrates a flowchart of another example embodiment of a method for preventing spatter in a pulsed electric arc welding process using the system of Fig. 1;
Fig. 9 illustrates an example of a pulsed output current waveform resulting from the pulsed electric arc welder of Fig. 1 that uses the switching module of Figs. 1-3 in accordance with the method of Fig. 8;
Fig. 10 illustrates an example pulse welding waveform; and
Fig. 11 illustrates a flowchart of a method for controlling short circuit events during a pulse welding process.

### DETAILED DESCRIPTION

During an arc welding process, when the distance between the tip of the electrode and the workpiece is relatively small, molten metal may be transferred via a contact transfer process (e.g., a surface-tension-transfer or STT process) or a free-flight transfer process (e.g., a pulsed welding process) with a tethered connection. In a contact transfer process, a molten metal ball on the tip of the welding electrode makes contact with the workpiece (i.e., shorts) and starts to "wet into" the molten puddle on the workpiece before the molten metal ball begins to substantially separate from the tip of the electrode.

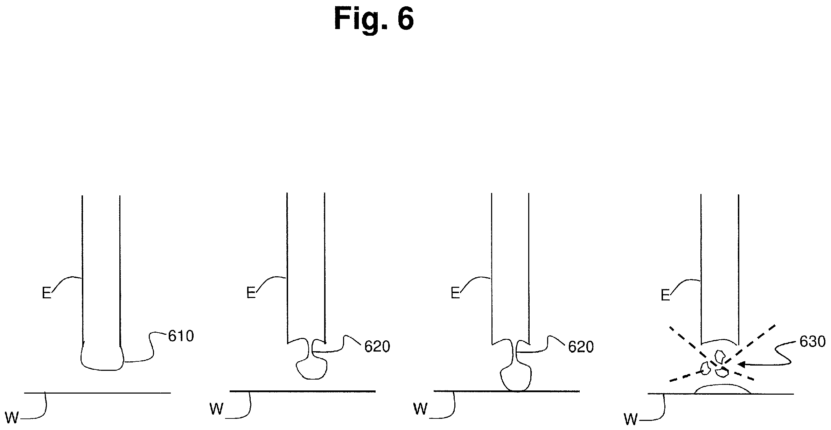

In a free-flight transfer process, the molten metal ball breaks free of the tip of the electrode and "flies" across the arc toward the workpiece. However, when the distance between the tip of the electrode and the workpiece is relatively short, the molten metal ball flying across the arc can make contact with the workpiece (i.e., short) while a thin tether of molten metal still connects the molten metal ball to the tip of the electrode. In such a tethered free-flight transfer scenario, the thin tether of molten metal tends to explode, causing spatter, when the molten metal ball makes contact with the workpiece as illustrated in Fig. 6 herein, due to a rapid increase in current through the tether.

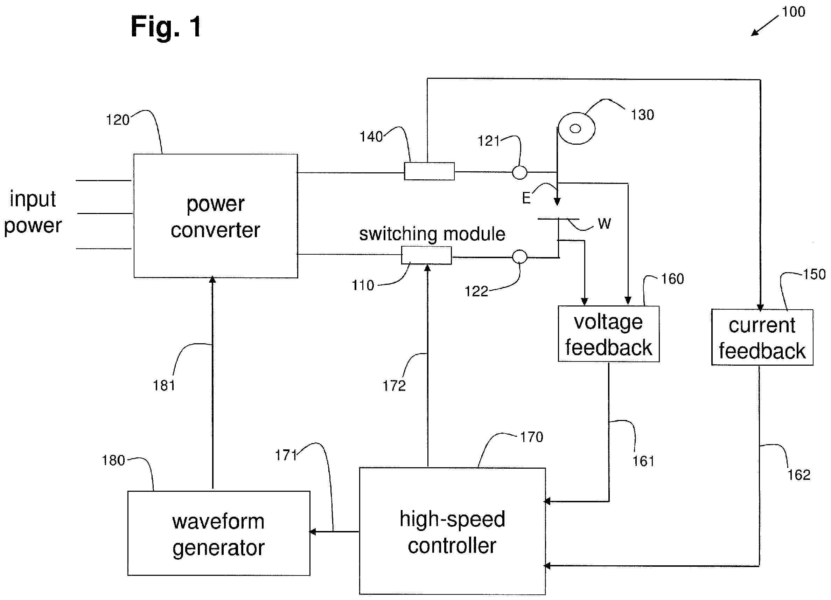

Fig. 1 illustrates a block diagram of an example embodiment of an electric arc welding system 100 incorporating a switching module 110 in a welding output return path and providing welding outputs 121 and 122. The system 100 includes a power converter 120 capable of converting an input power to a welding output power. The power converter 120 may be an inverter-type power converter or a chopper-type power converter, for example. The system 100 further includes a wire feeder 130 capable of feeding a welding electrode wire E through, for example, a welding gun (not shown) that connects the welding electrode wire E to the welding output 121.

The system 100 also includes a current shunt 140 operatively connected between the power converter 120 and the welding output 121 for feeding welding output current to a current feedback sensor 150 of the system 100 to sense the welding output current produced by the power converter 120. The system 100 further includes a voltage feedback sensor 160 operatively connected between the welding output 121 and the welding output 122 for sensing the welding output voltage produced by the power converter 120. As an alternative, the switching module 110 could be incorporated in the outgoing welding current path, for example, between the power converter 120 and the current shunt 140, or between the current shunt 140 and the welding output 121.

The system 100 also includes a high-speed controller 170 operatively connected to the current feedback sensor 150 and the voltage feedback sensor 160 to receive sensed current and voltage in the form of signals 161 and 162 being representative of the welding output. The system 100 further includes a waveform generator 180 operatively connected to the high speed controller 170 to receive command signals 171 from the high speed controller 170 that tell the waveform generator how to adapt the welding waveform signal 181 in real time. The waveform generator 180 produces an output welding waveform signal 181 and the power converter 120 is operatively connected to the waveform generator 180 to receive the output welding waveform signal 181. The power converter 120 generates a modulated welding output (e.g., voltage and current) by converting an input power to a welding output power based on the output welding waveform signal 181.

The switching module 110 is operatively connected between the power converter 120 and the welding output 122 which is connected to the welding workpiece W during operation. The high speed controller 170 is also operatively connected to the switching module 110 to provide a switching command signal (or a blanking signal) 172 to the switching module 110. The high speed controller 170 may include logic circuitry, a programmable microprocessor, and computer memory, in accordance with an embodiment of the present invention.

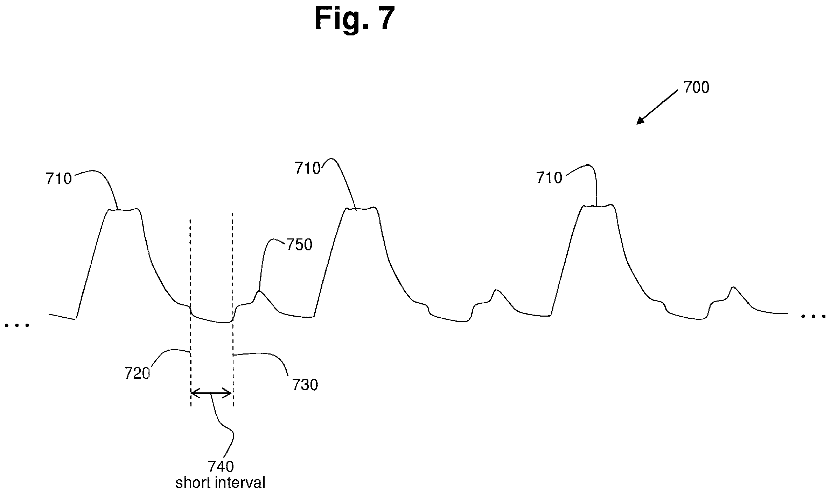

In accordance with an embodiment of the present invention, the high-speed controller 170 may use the sensed voltage signal 161, the sensed current signal 162, or a combination of the two to determine when a short occurs between the advancing electrode E and the workpiece W, when a short is about to clear, and when the short has actually cleared, during each pulse period. Such schemes of determining when a short occurs and when the short clears are well known in the art, and are described, for example, in U.S. 7,304,269, portions of which are incorporated herein by reference. The high-speed controller 170 may command the waveform generator 180 to modify the waveform signal 181 when the short occurs and/or when the short is cleared. For example, when a short is determined to have been cleared, the high-speed controller 170 may command the waveform generator 180 to incorporate a plasma boost pulse (see pulse 750 of Fig. 7) in the waveform signal 181 to prevent another short from occurring immediately after the clearing of the previous short.

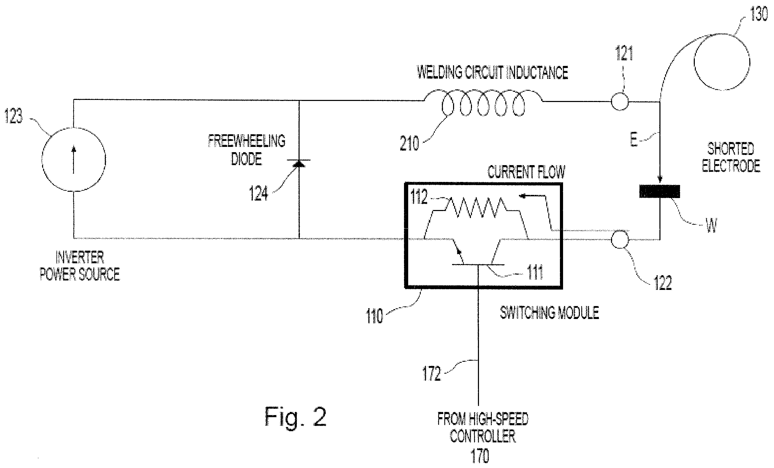

Fig. 2 illustrates a diagram of an example embodiment of a portion of the system 100 of Fig. 1, including the switching module 110 in the welding current return path. The power converter 120 may include an inverter power source 123 and a freewheeling diode 124. The welding output path will have an inherent welding circuit inductance 210 due to the various electrical components within the welding output path. The switching module 110 is shown as having an electrical switch 111 (e.g., a power transistor circuit) in parallel with a resistive path 112 (e.g., a network of high power rated resistors).

During a pulse period of the welding waveform, when no short is present, the electrical switch 111 is commanded to be closed by the switching command signal 172 from the high-speed controller 170. When the electrical switch 111 is closed, the electrical switch 111 provides a very low resistance path in the output welding return path, allowing welding current to freely return to the power converter 120 through the switch 111. The resistive path 112 is still present in the welding output return path, but most of the current will flow through the low resistance path provided by the closed switch 111. However, when a short is detected, the electrical switch 111 is commanded to be opened by the switching command signal 172 from the high-speed controller 170. When the electrical switch 111 is opened, current is cut off from flowing through the switch 111 and is forced to flow through the resistive path 112, resulting in the level of the current being reduced due to the resistance provided by the resistive path 112.

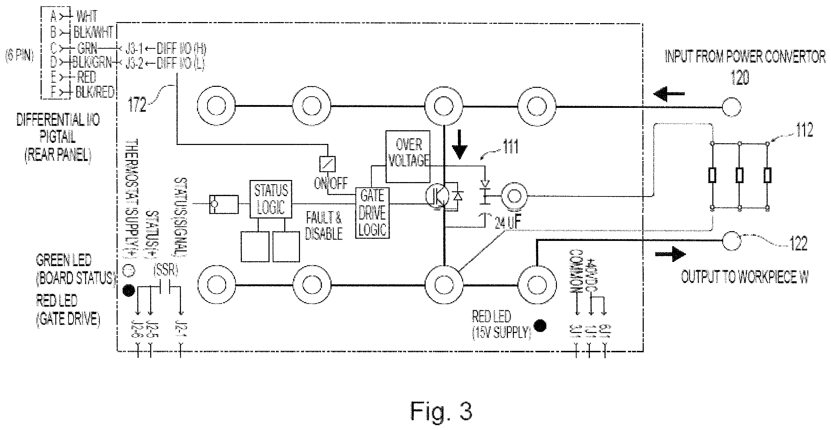

Fig. 3 illustrates a schematic diagram of an example embodiment of the switching module 110 of Fig. 1 and Fig. 2. The switching module 110 includes the transistor circuit 111 and the resistor network 112 as shown. The switching module 110 may include a circuit board for mounting the various electrical components of the module 110 including the transistor circuit 111, the resistor network 112, LEDs, and status logic circuitry, for example.

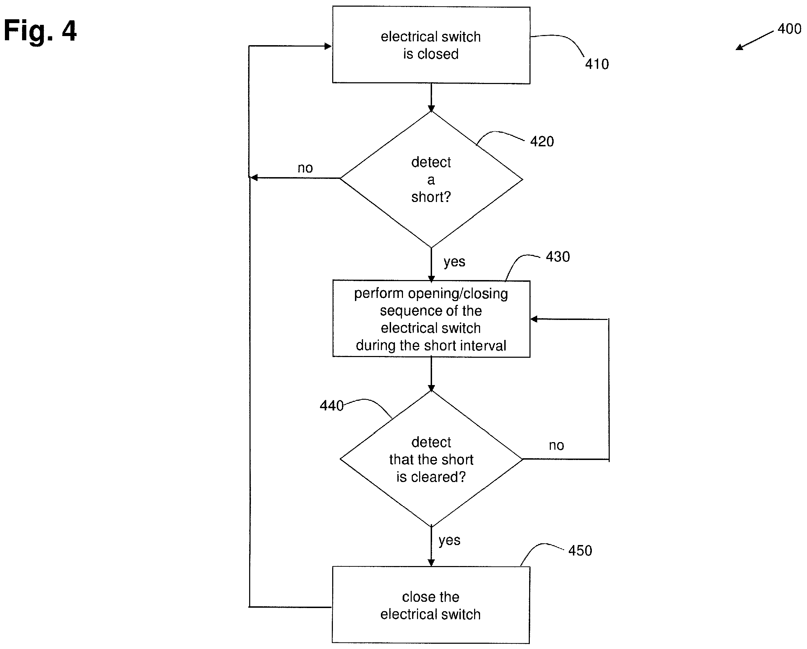

Fig. 4 illustrates a flowchart of a first example embodiment of a method 400 for preventing spatter in a pulsed electric arc welding process using the system 100 of Fig. 1. Step 410 represents operation where the switch 111 of the switching module 110 is normally closed (no short condition). In step 420, if a short is not detected, then the switch 111 remains closed (no short condition). However, if a short is detected then, in step 430, the switch 111 is commanded to go through an opening and closing sequence during the short interval (i.e., the time period over which the electrode is shorted to the workpiece).

The opening/closing sequence in step 430 starts by opening the switch 111 when the short is first detected. The switch 111 remains open for a first period of time (e.g., a first 10% of the short interval). This decreases the output current quickly so the short does not break right away causing a large amount of spatter. After the first period of time, the switch is again closed and the output current is ramped during a second period of time to cause the molten short to begin to form a narrow neck in an attempt to break free from the electrode and clear the short. During this second period of time, as the current is ramping, a dv/dt detection scheme is performed to anticipate when the short will clear (i.e., when the neck will break). Such a dv/dt scheme is well known in the art. The switch 111 is then opened again just before the short is about to clear (e.g., during the last 10% of the short interval) in order to quickly lower the output current once again to prevent excessive spattering when the neck actually breaks (i.e., when the short actually clears).

In step 440, if the short (short between the electrode and the workpiece) is still present, then the switch 111 remains open. However, if the short has been cleared then, in step 450, the switch 111 is again closed. In this manner, during a short condition, the switch 111 goes through an opening/closing sequence and the current flowing through the welding output path is reduced when the switch is open, resulting in reduced spatter. The method 400 is implemented in the high-speed controller 170, in accordance with an embodiment of the present invention. Furthermore, in accordance with an embodiment of the present invention, the system 100 is able to react at a rate of 120 kHz (i.e., the switching module 110 can be switched on and off at this high rate), providing sufficient reaction to detection of a short and detection of the clearing of the short to implement the method 400 in an effective manner.

In accordance with a somewhat simpler alternative embodiment, instead of going through the opening/closing sequence described above with respect to Fig. 4, the current of the welding circuit path is decreased, in response to detection of a short between the advancing wire electrode and the workpiece, by opening the switch 111 for at least a determined period of time, thus increasing the resistance in the welding circuit path. For most pulse periods, the determined period of time is of a duration allowing for the short to clear without having to first increase the current of the welding circuit path. During a given pulse period, if the short clears before the determined period of time has expired as desired, then the process proceeds to the next part of the pulse period. However, if the short does not clear within the predetermined period of time then, immediately after the determined period of time, the switch 111 is closed again, causing the current of the welding circuit path to once again increase and clear the short. In such an alternative embodiment, the switch 111 is simply opened for at least part of the determined period of time in response to the detection of the short. In most pulse periods, the current does not have to be increased to clear the short.

Furthermore as an option, when the short between the advancing wire electrode and the workpiece is detected, a speed of the advancing wire electrode can be slowed. Slowing the speed of the advancing wire electrode helps to clear the short more readily by not adding as much material to the short as otherwise would be added. To slow the speed of the advancing wire electrode, a motor of a wire feeder advancing the wire electrode may be switched off and a brake may be applied to the motor. The brake may be a mechanical brake or an electrical brake, in accordance with various embodiments.

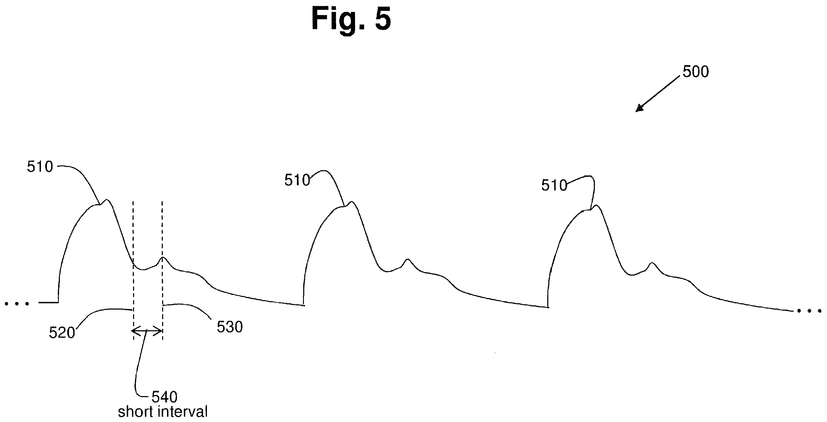

Fig. 5 illustrates an example of a conventional pulsed output current waveform 500 resulting from a conventional pulsed electric arc welder that does not use the switching module 110 of Figs. 1-3 in accordance with the method 400 of Fig. 4, or the simpler alternative method described above. As can be seen from the waveform 500 of Fig. 5, after a peak pulse 510 is fired, a short may occur starting at time 520, for example, that lasts until time 530, for example, when the short is cleared The times 520 and 530 define a short interval 540. As can be seen in Fig. 5, peak pulses 510 are fired at regular intervals during the multiple pulse periods or cycles of the welding process. During any given cycle or pulse period, a short condition may or may not occur. In a conventional system, when a short occurs, there is very little resistance in the welding output path compared to the inductance. Current continues to flow even if the power source is turned off.

Referring again to Fig. 5, during the short interval 540, the output current tends to increase due to the lack of an arc between the electrode E and the workpiece W (the resistance becomes very low), and due to the fact that the welding circuit inductance 210 acts to keep current flowing in the welding output path, even when the power converter 120 is phased back to a minimum level. The current tends to increase until the short is cleared (i.e., until the molten metal short breaks free of the electrode E). However, at such increased current levels, when the short breaks or clears, the increased current levels tend to cause the molten metal to explode causing spatter.

Fig. 6 illustrates the exploding spatter process that was discovered using high speed video technology in a free-flight transfer process having a tethered connection. A high peak pulse (e.g., 510) causes a ball of molten metal 610 to push out towards the workpiece W creating a narrow tether 620 between the ball 610 and the electrode E. As the ball 610 flies toward the workpiece W across the arc, the tether 620 narrows and, eventually, a short occurs between the electrode E and the workpiece W through the tether 620. This condition tends to occur for almost every pulse period in an operation where the welding electrode operates very close to the workpiece. In particular, it was discovered that for a free-flight transfer pulse welding process, the tether 620 creates an incipient short and a large amount of current can begin to flow through the narrow tether 620. The increasing current level finally causes the relatively thin molten tether 620 to explode creating spatter 630 as shown in Fig. 6. However, by incorporating the switching module 110 and the method 400 (or the simpler alternative) as described above herein, the spatter 630 that is created can be greatly reduced.

Fig. 7 illustrates an example of a pulsed output current waveform 700 resulting from the pulsed electric arc welder 100 of Fig. 1 that uses the switching module 110 of Figs. 1-3 in accordance with the method 400 of Fig. 4. As can be seen from the waveform 700 of Fig. 7, after a peak pulse 710 is fired, a short may occur starting at time 720, for example, that lasts until time 730, for example, when the short is cleared. The times 720 and 730 define a short interval 740. As can be seen in Fig. 7, peak pulses 710 are fired at regular intervals during the multiple pulse periods or cycles of the welding process. During any given cycle, a short condition may or may not occur. However, when the distance between the tip of the electrode and the workpiece is relatively small, a short can occur on almost every cycle.

Referring again to Fig. 7, during the short interval 740, the switch 111 of the switching module 110 is opened when the short first occurs and again when the short is about to clear, causing the output current to flow through the resistive path 112 and, therefore, causing the current level to reduce. As an example, the switching signal 172 may be a logic signal that goes from high to low when a short is detected, causing the switch to open. Similarly, when the short is cleared, the switching signal 172 may go from low to high to close the switch 111 again. When the switch 111 is opened, the resistive path 112 puts a load on the welding output path allowing the freewheeling current to drop quickly to desired levels. The current tends to reduce until the short is cleared and, at such reduced current levels, when the short breaks or clears, the molten metal tends to pinch off in an unexplosive manner, eliminating or at least reducing the amount of spatter created. Also, in the waveform 700 of Fig. 7, the plasma boost pulse 750, which is used to help prevent another short from occurring immediately after the short that was just cleared, is more prominent and potentially more effective.

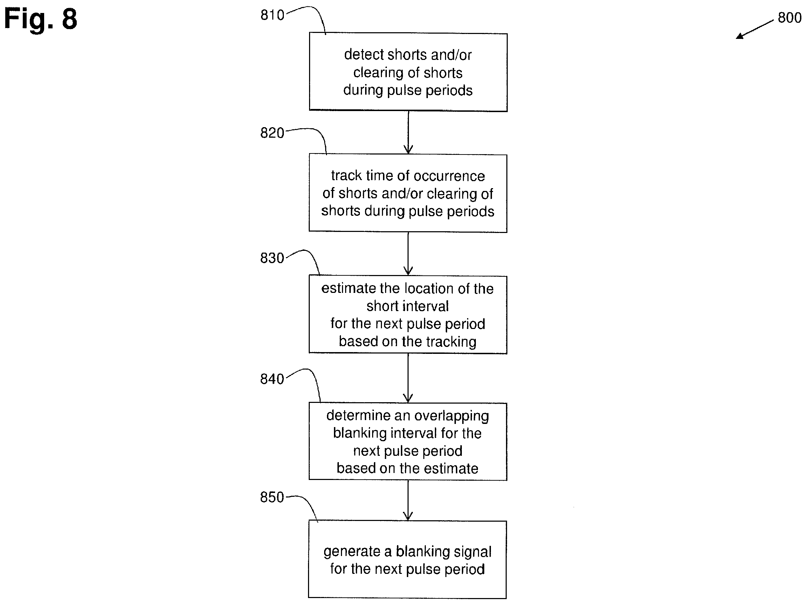

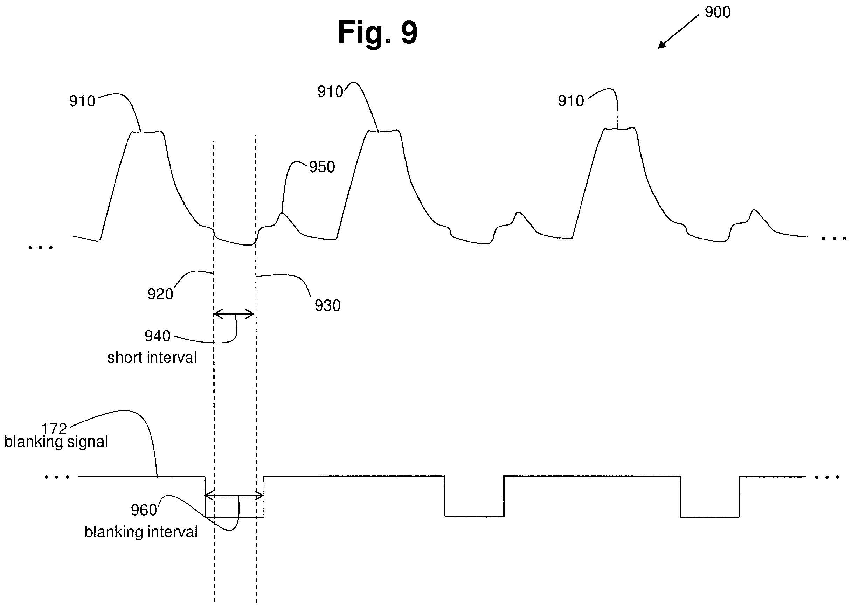

Fig. 8 illustrates a flowchart of another example embodiment of a method 800 for preventing spatter in a pulsed electric arc welding process using the system 100 of Fig. 1. In accordance with an embodiment, the method 800 is performed by the controller 170. The high-speed controller 170 tracks the times of occurrence of the shorts and/or the clearing of the shorts and provides an estimate of when the short interval 940 (the time between the occurrence of a short and when the short is cleared) (see Fig. 9) will occur during at least the next pulse period. From this estimate, a blanking interval 960 (see Fig. 9) can be determined which is used to generate the blanking signal 172.

In step 810 of the method 800, the system 100 detects the occurrence of shorts and/or the clearing of those shorts during the repeating pulse periods of the pulsed welding waveform, according to known techniques. In step 820, the time of occurrence of the detected shorts and/or clearings within the pulse periods are tracked (e.g., by the high-speed controller 170). In step 830, the location and duration of the short interval 940 (see Fig. 9) for a next pulse period is estimated based on the tracking results. In step 840, an overlapping blanking interval 960 for at least the next pulse period is determined based on the estimated location of the short interval for the next pulse period. In step 850, a blanking signal (a type of switching signal) 172 is generated (e.g., by the controller 170) to be applied to the switching module 110 during the next pulse period.

Fig. 9 illustrates an example of a pulsed output current waveform 900 resulting from the pulsed electric arc welder 100 of Fig. 1 that uses the switching module 110 of Figs. 1-3 in accordance with the method 800 of Fig. 8. As can be seen from the waveform 900 of Fig. 9, after a peak pulse 910 is fired, a short may occur starting at time 920, for example, that lasts until time 930, for example, when the short is cleared. The times 920 and 930 define a short interval 940. As can be seen in Fig. 9, peak pulses 910 are fired at regular intervals during the welding process. During any given cycle, a short condition may or may not occur. However, during a welding process where the arc length is relatively short (i.e., where the wire electrode is operated relatively close to the workpiece), shorts can occur in almost every pulse period.

In accordance with the method 800, the times of occurrence of the short and/or clearing of the short within the pulse period are determined and tracked from pulse period to pulse period. In this manner, the controller 170 may estimate the location of the short interval that will likely occur in the next or upcoming pulse periods. However, at the beginning of a pulsed welding process, before any substantial tracking information is available, the location of the short interval may be a stored default location based on, for example, experimental data or stored data from a previous welding process. The blanking signal 172 can be adapted or modified to form a blanking interval 960 within the blanking signal 172 which temporally overlaps the estimated short interval 940 for the next pulse period(s). Ideally, the blanking interval 960 starts shortly before the short interval 940 of the next pulse period (e.g., before the time 920) and ends shortly after the short interval 940 of the next pulse period (e.g., after the time 930), thus the temporal overlap. In one embodiment, only the times of occurrence of a short are tracked, not the clearing of the shorts. In such an embodiment, the duration of the blanking interval is set to last long enough for the short to clear, based on experimental knowledge.

In this manner, the actual occurrence of a short during the next pulse period does not have to be detected before the switch 111 of the switching module 110 can be opened. As the pulsed welding process progresses, the location of the short interval may drift or change as the distance between the wire electrode and the workpiece drifts or changes, for example. However, in this embodiment, since the location of the short interval is being tracked over time, the location of the blanking signal can be adapted to effectively follow and anticipate the short interval. By opening the switch 111 during the blanking interval 960, the current drops and it is expected that the tether will occur and break during the blanking interval 960.

Experimental results have shown that, using the switching module 110 as described herein in a particular pulsed welding scenario, the welding output current level at the point of clearing the short can be reduced from about 280 amps to about 40 amps, making a tremendous difference in the amount of spatter produced. In general, reducing the current below 50 amps seems to significantly reduce spatter. In addition, travel speeds (e.g., 60-80 inches/minute) and deposition rates are able to be maintained.

Other means and methods of reducing the welding output current level during the time period when a short is present between a welding electrode and a workpiece are possible as well. For example, in an alternative embodiment, the control topology of a welding power source may be configured to control the output current to a highly regulated level during the time of the short. The power source can control the shorting current to a lower level (e.g., below 50 amps) during a shorting interval to reduce the spatter. For example, referring to Fig. 1, the switching module 110 can be disabled or eliminated, allowing current to freely flow in the welding output circuit path. The controller 170 is configured to command the waveform generator 180 to modify a portion of the output welding waveform signal 181 of the welding process during the blanking interval to reduce the welding output current through the welding output circuit path. Therefore, in this alternative embodiment, the controller 170 reduces the current during the blanking interval through the waveform generator 180 and the power converter 120, instead of via the switching module 110. Such an alternative embodiment can work quite well if the inductance 210 of the welding circuit is sufficiently low.

During pulse welding, a small arc length is generally desired as it tends to result in a better weld bead with increased travel speed as compared to welds produced using longer arc lengths. However, welding with small arc lengths can result in spatter events, such as incipient short circuits due to tethered connections between a wire electrode and molten electrode material contacting the weld puddle. Tethered incipient short circuits are caused by the thin tether of molten metal that connects the molten metal ball to the tip of the electrode, and such tethered incipient short circuits may or may not be desired during welding. During some pulse welding processes, tethered incipient short circuits may be desired during each pulse period (e.g., subsequent to each peak pulse), whereas during other pulse welding processes tethered incipient short circuits may not be desired at all (e.g., to reduce spatter events and resulting spattering). In further pulse welding processes, tethered incipient short circuits may be desired during some pulse periods, but not others, such as every second pulse period, every third pulse period, every fourth pulse period, every tenth pulse period, every twentieth pulse period, etc.

Appropriate pulse welding waveforms can be designed to either create tethered incipient short circuits during welding (either during each pulse period or during some pulse periods but not all pulse periods), or avoid the occurrence of tethered incipient short circuits. In either case, the welding waveforms are designed with a model of the welding output path in mind. For example, a typical welding circuit inductance 210 level (Fig. 2) and resistance level may be assumed when designing welding waveforms. Welding waveforms may further be designed based on an expected shielding gas mixture or electrode design. If a particular welding setup (e.g., welding output path, gas mixture, electrode, etc.) matches the assumed setup, then the welding waveforms should perform as designed (e.g., cause or avoid tethered incipient short circuits during pulse welding). However, if a particular welding setup does not match the assumed setup, such as when long welding cables are used or the gas mixture is changed, then a welding waveform may not perform as designed (e.g., the arc length may change). For example, tethered incipient short circuits may not occur during each pulse period, or may occur when not desired. Even changing welding position, such as from vertical to horizontal welding, can affect the performance of the welding waveform and the arc and arc length.

Conventionally, MIG welding power supplies employ closed-loop voltage control to control the welding waveform (e.g., closed-loop control to achieve a preset average voltage). However, such conventional control can result in varying types of droplet transfer based on the welding setup as discussed above. With reference to Fig. 1, the controller 170 can monitor the occurrence of short circuit events (e.g., tethered incipient shorts) during free flight transfer pulsed arc welding and adjust parameters of the welding waveform based on conditions or characteristics associated with the short circuit events. Such conditions can include the frequency, duration or severity of the short circuit events, the welding current magnitude as the short clears or breaks, the welding current magnitude as the short occurs, the timing of the short circuit with respect to a peak pulse in the welding waveform (e.g., the time delay between the peak pulse and the short circuit), and the temporal location of a tethered incipient short circuit within the pulse period. For example, based on the characteristics or frequency of short circuit events during pulse welding, the controller 170 can command the waveform generator 180 to modify the waveform signal 181 to eliminate tethered incipient short circuiting of the welding electrode E to the workpiece W, or regulate such short circuits (e.g., control their frequency and/or duration), so that they occur each pulse period or at another desired frequency, such as 1 short circuit event every N pulse periods, where N is an integer (N can be 1 or greater than 1).

The controller 170 can adjust one or more parameters of the welding waveform to control the welding output and arc length and achieve a desired mode of droplet transfer, based on the occurrence of short circuit events during free flight transfer pulsed arc welding. If the characteristics of the welding output with respect to short circuit duration, frequency, location within the pulse period, or lack of short circuiting, are not as intended or desired for the particular welding application, the controller 170 can automatically recognize this deviation and adjust the welding waveform parameters accordingly (e.g., to regulate tethered incipient short circuiting of the welding electrode to the workpiece). For example, by adjusting welding waveform parameters based on short circuit event characteristics, the controller 170 can control how often tethered incipient short circuits occur, such as once every N pulse periods, how long the short circuits last, when they occur within the pulse period, current magnitudes during the short circuit events, etc.

In certain embodiments, only selected pulse periods include a tethered incipient short circuit while other pulse periods do not. How frequently the pulse periods include a short circuit can be based on additional welding parameters, such as wire feed speed WFS. For example, welding with a faster WFS could result in more pulse periods including a short circuit, than welding with a slower WFS. In certain embodiments, the welding waveform can include more than one short circuit event during each pulse period, and the controller 170 can adjust parameters of the welding waveform based on the total or summed duration of the multiple short circuit events.

The welding waveform can be selected by an operator of the welding system or by a separate control system (e.g., a robot controller, programmable logic controller (PLC), etc.) that is in communication with the controller 170. The welding waveform can also be selected by the controller 170 based on various settings or parameters, such as a selected welding process. In certain embodiments, the controller 170 can automatically determine whether or not tethered incipient short circuits are intended during welding or are included in the welding waveform. The controller 170 can also determine how frequently tethered incipient short circuits should occur, how long they should last, etc. For example, the controller 170 can analyze data defining the selected welding waveform to determine whether or not short circuits are intended during welding and/or the frequency and other characteristics of the short circuits. The data defining the selected welding waveform can also include an indication as to whether or not short circuits are intended during welding and characteristics or conditions related to the short circuits. For example, the number or frequency of shorting events, the durations of the shorting events, their location within the pulse period or timing with respect to other aspects of the pulse period (e.g., temporal offset from a peak pulse or plasma boost pulse), the magnitude of welding current as the short clears, etc., can be programmed into the controller as part of the welding waveform. From the selected welding waveform, the controller 170 can automatically determine the characteristics of the short circuits. During active welding, the controller 170 can monitor the short circuiting that actually occurs. The controller 170 can automatically adjust one or more parameters of the welding waveform to either eliminate the shorts if they are not desired or are not included in the welding waveform, or regulate the shorts so that they meet the programmed characteristics (e.g., are of the proper duration, frequency, etc.) If the electrode is shorting too severely into the weld puddle, such as too quickly or for too long a duration, or is not shorting at all or for too short a duration, or is shorting at the wrong frequency or wrong position within the pulse period, parameters of the welding waveform can be adjusted in a closed-loop fashion using the monitored characteristics of the shorts as feedback, rather than or in addition to using average voltage as feedback. The controller 170 can also adjust the one or more parameters of the welding waveform based on additional monitored data, such as welding voltage or current. For example, the controller 170 can make parameter adjustments based on both of the short circuit duration and/or frequency and the current level occurring during the short circuit just prior to the molten ball separating from the electrode. If the current level during the short circuit is too high, one or more pulses of the welding waveform can be increased in duration or magnitude to put more energy into the waveform to help separate the molten ball from the electrode (and thus reduce the severity of the short circuit).

Example parameters of the welding waveform that can be adjusted by the controller 170 to achieve desired tethered incipient short circuits, or to eliminate such short circuits, include welding voltage, welding current, pulse width of a peak pulse, pulse magnitude of the peak pulse, pulse width of a plasma boost pulse, pulse magnitude of the plasma boost pulse, rising and falling ramp rates of the peak pulse, pulse frequency of the peak pulse and/or plasma boost pulse, etc. For example, if tethered incipient short circuits are occurring during welding, but are too severe such as lasting for too long a duration, the peak pulse width and/or magnitude can be increased to help pinch the molten metal from the electrode more quickly. By regulating tethered incipient short circuiting as discussed above, a desired small arc length can be achieved during welding.

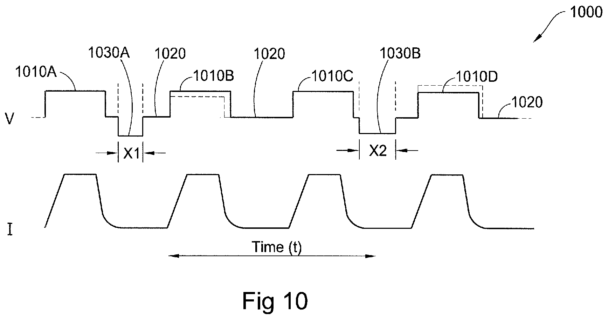

Figure 10 illustrates an example pulse welding waveform 1000 that can be modified based on the occurrence of tethered incipient short circuits during welding. The waveform 1000 includes a series of periodic peak pulses 1010A, 1010B, 1010C, 1010D. The waveform 1000 further includes background levels 1020, and low voltage short circuit events 1030A, 1030B. It can be seen that the duration X1 of the first short circuit event 1030A is smaller than the duration X2 of the second short circuit event 1030B. If the first short circuit event 1030A is not severe enough (e.g., too short in duration), the pulse width and/or pulse magnitude of the subsequent peak pulse 1010B can be adjusted downward, as indicated by dashed lines. If the second short circuit event 1030B is too severe, the pulse width and/or pulse magnitude of the subsequent peak pulse 1010D can be adjusted upward, as indicated by dashed lines. The pulse welding waveform 1000 can also include plasma boost pulses as shown in Fig. 7, and the plasma boost pulses can be adjusted similarly to the peak pulses to achieve desired short circuit durations and frequencies. As discussed above, if the pulse characteristics of the waveform 1000 with respect to short circuit duration, frequency, location in the pulse period, or lack of short circuiting, are not as intended or desired, the controller can automatically recognize this deviation and adjust the welding output accordingly. It can further be seen in Fig. 10 that not all pulse periods have to include a short circuit event. No short circuit event occurs between peak pulse 1010B and peak pulse 1010C. This may be acceptable if every second pulse period is intended to include a short circuit event, or unacceptable if every pulse period is intended to include a short circuit event.

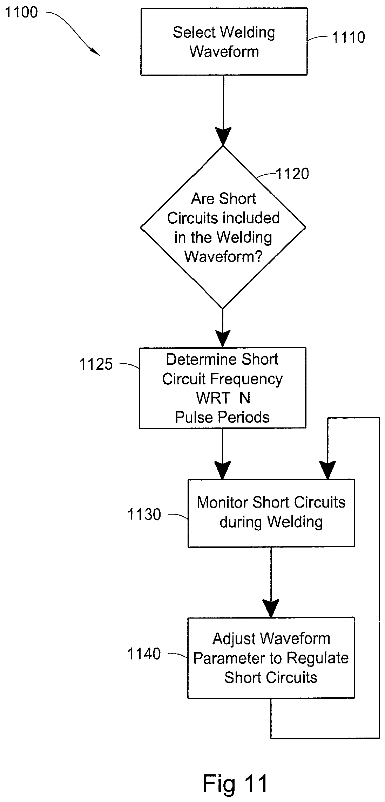

Figure 11 illustrates a flowchart of a method 1100 for controlling short circuit events during a pulse welding process. The method 1100 can be executed entirely or in part by the controller 170 discussed above with respect to Fig. 1. A welding waveform is selected 1110 by the controller or by an operator of the welding system, for example. A determination 1120 is then made as to whether or not tethered incipient short circuits are included in the selected welding waveform. Regardless of whether or not tethered short circuits are included in the selected welding waveform, it still may be desirable to create tethered incipient short circuits periodically, such as every N pulse periods, to help keep the arc length short. Thus, a determination 1125 of the desired frequency of short circuiting events can be made with respect to N pulse periods of the welding waveform, even if short circuits are not included in the welding waveform or are included in only certain pulse periods (e.g., more pulse periods may lack a short circuit event than include a short circuit event). Short circuit events are monitored 1130 during the free flight transfer pulsed arc welding process to record various characteristics, such as the duration, frequency, severity, etc. of the short circuit events. Welding waveform parameters are then adjusted based on the short circuit event duration, and possibly other information (e.g., welding current level during a short circuit condition) to regulate the short circuits 1140. If short circuits are included in the welding waveform, welding waveform parameters can be adjusted to achieve a tethered incipient short circuit of proper duration and frequency (e.g., during each pulse period or during selected pulse periods). If short circuits are not included in the welding waveform, welding waveform parameters can be adjusted so that most of the pulse periods lack a short circuit or all of the pulse periods lack a short circuit. Controlling the welding waveform to generate periodic tethered incipient short circuits, even when they are not generally desired during welding and are not included during each pulse period, can help to keep the arc length short. For example, every tenth pulse period can include a tethered incipient short circuit in order to regulate arc length. If short circuits are not desired, but still occur during certain pulse periods, the frequency of such short circuits can be determined from additional welding parameters, such as WFS for example.

While the claimed subject matter of the present application has been described with reference to certain embodiments, it will be understood by those skilled in the art that various changes may be made and equivalents may be substituted without departing from the scope of the claimed subject matter. In addition, many modifications may be made to adapt a particular situation or material to the teachings of the claimed subject matter without departing from its scope. Therefore, it is intended that the claimed subject matter not be limited to the particular embodiment disclosed, but that the claimed subject matter will include all embodiments falling within the scope of the appended claims.

**REFERENCE NUMERALS**

| | | | |
|---|---|---|---|
| 100 | arc welding system | 630 | spatter |
| 110 | switching module | 700 | waveform |
| 111 | electrical switch | 710 | peak pulse |
| 112 | resistive path | 720 | time |
| 120 | power converter | 730 | time |
| 121 | welding output | 800 | method |
| 122 | welding output | 810 | step |
| 123 | power source | 840 | step |
| 124 | diode | 850 | step |
| 130 | wire feeder | 900 | waveform |
| 140 | current shunt | 910 | peak pulse |
| 150 | current feedback sensor | 920 | time |
| 160 | voltage feedback sensor | 930 | time |
| 161 | signal | 940 | short interval |
| 162 | signal | 960 | blanking interval |
| 170 | controller | 1000 | waveform |
| 171 | command signal | 1010A | periodic peak pulse |
| 172 | command signal | 1010B | periodic peak pulse |
| 180 | waveform generator | 1010C | periodic peak pulse |
| 181 | welding waveform signal | 1010D | periodic peak pulse |
| 210 | inductance | 1020 | background level |
| 400 | method | 1030A | short circuit event |
| 420 | step | 1030B | short circuit event |
| 430 | step | 1100 | method |
| 440 | step | 1110 | step |
| 450 | step | 1120 | step |
| 500 | waveform | 1125 | step |
| 510 | peak pulse | 1130 | step |
| 520 | time | 1140 | step |
| 530 | time | | |
| 540 | short interval | E | welding electrode wire |
| 610 | ball | W | workpiece |
| 620 | tether | | |

## Claims

1. A system for controlling arc length by regulating short circuit events during a welding process, comprising:
a welding power supply configured to conduct a free flight transfer pulsed arc welding process between a welding electrode (E) and a workpiece (W); and
a controller (170) operatively connected to the welding power supply to control a welding waveform (500) of the free flight transfer pulsed arc welding process,
**characterized in that** the controller (170) is configured to:
automatically determine (1125), based on a selected welding waveform, a frequency of tethered incipient short circuiting with respect to N pulse periods of the welding waveform (500), wherein N is an integer;
monitor (1130) short circuit events during the free flight transfer pulsed arc welding process, and
automatically adjust (1140), based on said short circuit events, at least one parameter of said welding waveform (500) to regulate the frequency of tethered incipient short circuiting of the welding electrode (E) to the workpiece (W) during the free flight transfer pulsed arc welding process.

2. The system of claim 1, wherein said welding waveform includes a peak pulse (510) and a plasma boost pulse having a smaller pulse magnitude than said peak pulse (510), and said at least one parameter of said welding waveform (500) includes the pulse magnitude of the plasma boost pulse.

3. The system of claim 1 or 2, wherein the frequency of tethered incipient short circuiting is regulated such that more pulse periods lack a short circuit event than include a short circuit event.

4. The system of one of the claims 1 to 3, wherein the controller (170) regulates the frequency of tethered incipient short circuiting of the welding electrode (E) to the workpiece (W) such that selected pulse periods include a tethered incipient short circuit and other pulse periods do not include a tethered incipient short circuit.

5. The system of one of the claims 1 to 4, wherein the controller (170) is configured to adjust said at least one parameter of the welding waveform (500) based on duration of the short circuit events, or based on timing of the short circuit events within respective pulse periods.

6. The system of one of the claims 1 to 5, wherein the frequency of tethered incipient short circuiting is one short circuit event per N pulse periods, wherein N is greater than one.

7. A system for controlling arc length by regulating short circuit events during a welding process in particular according to one of the preceding claims, comprising:
a welding power supply configured to conduct a free flight transfer pulsed arc welding process between a welding electrode (E) and a workpiece (W); and
a controller (170) operatively connected to the welding power supply to control a welding waveform (500) of the free flight transfer pulsed arc welding process,
**characterized in that** the controller (170) is configured to:
automatically determine (1125) whether or not tethered incipient short circuits are included in said welding waveform (500),
monitor (1130) a short circuit event characteristic during the free flight transfer pulsed arc welding process, and
automatically adjust (1140), based on said short circuit event characteristic, at least one parameter of said welding waveform (500) to regulate tethered incipient short circuiting of the welding electrode (E) to the workpiece (W) during the free flight transfer pulsed arc welding process after determining that tethered incipient short circuits are included in said welding waveform (500).

8. The system of claim 7, wherein the controller (170) regulates a frequency of tethered incipient short circuiting of the welding electrode (E) to the workpiece (W) such that selected pulse periods include a tethered incipient short circuit and other pulse periods do not include a tethered incipient short circuit.

9. The system of claim 8, wherein more pulse periods lack a short circuit event than include a short circuit event.

10. The system of claim 8 or 9, wherein the frequency of tethered incipient short circuiting is one short circuit event per N pulse periods, wherein N is an integer greater than one.

11. The system of one of the claims 7 to 10, wherein the short circuit event characteristic includes a short circuit duration, and/or wherein the short circuit event characteristic includes a frequency of tethered incipient short circuiting of the welding electrode (E) to the workpiece (W).

12. The system of one of the claims 7 to 11, wherein the short circuit event characteristic includes a current magnitude during short clearing.

13. The system of one of the claims 7 to 12, wherein the short circuit event characteristic includes a timing of a short circuit event within a pulse period.

14. The system of one of the claims 7 to 13, wherein the welding waveform (500) includes more than one tethered incipient short circuit per pulse period, and the controller (170) adjusts said at least one parameter of said welding waveform (500) based on a summed duration of said more than one tethered incipient short circuit per pulse period.

15. The system of one of the claims 1 to 14, wherein said at least one parameter of said welding waveform (500) includes a pulse width of a periodic pulse in said welding waveform, a pulse magnitude of a periodic pulse in said welding waveform, a pulse frequency of a periodic pulse in said welding waveform, or both of a pulse width and a pulse magnitude of a peak pulse in said welding waveform.
